# EUROPEAN PATENT APPLICATION

(11) **EP 2 636 660 A1**
(43) Date of publication of application: **11.09.2013**
(21) Application number: 11837449.5
(22) Date of filing: 30.05.2011
(51) Int. Cl.: C04B 35/622, C04B 35/14

(54) **SOUND ADSORPTION CERAMIC AND PRODUCTION METHOD THEREOF**

(30) Priority: 07.11.2010 CN 201010539420
(71) Applicant: Oceano Ceramics Co., Ltd., Guangdong 528138 (CN)
(72) Inventor: TANG, Qi, Foshan Guangdong 528138 (CN); ZHENG, Shulong, Foshan Guangdong 528138 (CN); LU, Bin, Foshan Guangdong 528138 (CN)
(74) Representative: Manitz, Gerhart
(86) International application number: PCT/CN2011/074844
(87) International publication number: WO 2012/058922

(57) **Abstract**

The present invention discloses a sound-absorbing ceramic and the manufacturing method thereof. The sound-absorbing ceramic is a multi-communicating-pore structured ceramic, mainly contains glass phase, quartz phase and Mullite phase; the raw material formula of sound-absorbing ceramic (percentage by weight) include: 15%~55% ceramic residue, 15%~25% clay, 1%~3% talc, 0.01%~10% quartz, 10%~45% feldspar, together with a proper amount of reinforcing agent, dispergator and water, as well as 3%~20% portland cement powder , or 3%~20% portland cement powder together with at least one decomposable inorganic salt. The sound-absorbing ceramic with multi communicating pores is achieved after high temperature burning. The sound-absorbing ceramic as described in the present invention owns a high sound-absorbing coefficient and a long service life as well as other characters including environment-friendly and healthy, fire prevention ability, moisture proof, water resistant, mothproof as well as anti-static and anti-ultraviolet. The manufacturing method of the said sound-absorbing ceramic in the present invention owns a low cost, simple and feasible, conductive to industrial productions.

## Description

### TECHNICAL FIELD

The present invention relates to the ceramic materials technical field, and more particularly to a sound-absorbing ceramic and the manufacturing method thereof.

### BACKGROUND ART

Preventing and controlling the noise pollution is an important part in city constructions and designs as well as road and rail traffic designs. At the same time of using necessary sound insulation equipments and special sound insulation structures, the use of sound-absorbing materials is the most important method in solving this problem. Sound absorption is also an important technical measure in architectural acoustic designs. Most materials currently used in architectural sound absorption designs are mineral fiber porous sound-absorbing materials. Due to this kind of materials has certain damages to human health, it has been questioned for a long time. However, due to the low cost and good sound absorption effect, currently it is still widely used. The requirements for sound-absorbing materials and their structures in the market are not only those inherent features such as owning a high sound absorption coefficient and easy installation, but also be healthy and environment-friendly, owning a good appearance as well as fire and dust prevention and more are also becoming important factors. While sound-absorbing ceramic materials not only fit all these characters listed above, but own a long service life and other characters including moisture proof, water resistant, mothproof as well as anti-static and anti-ultraviolet, they own significant market competition ability.

The residue produced in late cold working during ceramic polished tiles manufacturing, has not been effectively used so far. In recent 10 years, the ceramic residue accumulated in our country has been over 20 million tons, and still increases at a speed of millions of tons per year.The ceramic residues are processed as wastes, dealt as engineering filling materials, which is relatively simple, while piles of ceramic residue are occupying lots of lands, seriously damaging the ecological environments. The invention patent application ,whose publication number is CN101054276A disclosed a sound absorption ceramic plate using kitchen wastes as the raw materials and preparation method thereof, i.e., Through a drying process, organic matters of kitchen solid waste ecological materials, used as raw materials ,are charring in a high temperature nitrogen protection stove to form porosint. Further smashing the charred matter, binding with organics, cured in an oven, a sound-absorbing ceramic-like plate is achieved after naturally cooling. However, its technological operation is complicated, and it owns a high cost, and using organic adhesives to cure makes it not a ceramic material. The invention patent application ,whose publication number is CN1296933A disclosed a sound-absorbing ceramic material, composed by ceramic blocks, which is manufactured by adding pore-forming flammable ingredients to refractory clays and refractory clay chamotte, then calcining the blend and producing communicating pores of having a main pore diameter from 0.2 to 2000µm, forming lots of sound absorption holes and sound absorption grooves on the surfaces, then glazing all the surfaces except the inner surfaces and bottom surfaces of the sound absorption pores or grooves. The invention is dealing with calcining refractory clays with flammable materials added, and forming pores from the empty areas after calcining. Calcining for refractory clay requires a very high temperature; otherwise its strength will be meaningless. Also, the said invention patent application was adopting pore forming materials of polystyrene particles or sawdust of a diameter from 0.5mm to 2mm, the process requires cast molding or extrusion molding, which are complicated. If adopting pure polystyrene, the production cost will be extremely high, while burning impure polystyrene, poisonous gases will be distributed and pollute the environment, thus, it has no production feasibility. The invention patent application, whose publication number is CN101182232A disclosed a light weight ceramic tile and its preparation method, the said invention effectively utilizes ceramic residue, however, it produces light weight ceramics with closed pore structures only, and does not involve the portland cement used to produce the communicating pores as adopted in the present invention, thus it is impossible to produce communicating pores, and owns no characters of a sound-absorbing material.

### BRIEF SUMMARY OF THE INVENTION

The technical problems to be solved in the present invention is, aiming at the defects of the prior art, providing a sound-absorbing ceramic and the manufacturing method thereof, which is not only environment-friendly with a low cost, has a good sound absorption effect, as well as fire, electrostatic and ultraviolet prevention ability, but also has a wide application area.

The technical problems to be solved in the present invention are achieved by adopting the following technical solution:

The present invention provides a sound-absorbing ceramic, which is a kind of ceramic with multi-communicating-pore structure containing glass phase, quartz phase and Mullite phase.

The sound-absorbing ceramics are the ceramic tiles or ceramic plates manufactured by the ceramic residues acting as the main foaming materials.

The sound-absorbing ceramics are the ceramic tiles or ceramic plates manufactured by pore forming materials of portland cement or portland cement together with at least one decomposable inorganic salt.

The raw materials of the sound-absorbing ceramic include (percentage by weight): 15%~55% ceramic residue, 15%~25% clay, 1%~3% talc, 0.01%~10% quartz, 10%~45% feldspar, reinforcing agent, dispergator and water, as well as 3%~20% portland cement powder, or 3%~20% portland cement powder together with at least one decomposable inorganic salt.

Wherein, the reinforcing agent adopts sodium carboxymethyl cellulose and the dispergator adopts sodium tripolyphosphate.

The breaking strength of the sound-absorbing ceramic is larger than 900N and the noise reduction coefficient, NRC, is larger than 0.55.

Preferably, the noise reduction coefficient, NRC, is larger than 0.9.

The present invention also provides a manufacturing method to produce the said sound-absorbing ceramics, that is, pulping by ball grinding after matching all the raw materials, spray drying to make dry powders, mixing up with portland cement powder, or portland cement powder together with at least one decomposable inorganic salt, then achieving the ceramic body through compressor dry pressing, after drying, firing in the furnace at a temperature of 1125°C~1210°C and done.

The above said manufacturing method contains the following steps:
a. mix up the raw materials (percentage by weight) including 15%~55% ceramic residue, 15%~25% clay, 1%~3% talc, 0.01%~10% quartz, 10%~45% feldspar, as well as reinforcing agent, dispergator and water, ball mill the mixture in a ball grinding machine, after sieving and removing irons, dry up through spraying powders on the mud from the spray drying tower and achieve the dry powder;
b. add 3%~20% portland cement powder, or 3%~20% portland cement powder together with at least one decomposable inorganic salt into the said dry powder, and achieve a mixture;
c. achieving the ceramic body through compressor dry pressing the mixture. The thickness of the ceramic body achieved is no less than 13mm, and the ceramic body is dried up by dry machines, and when the water contained in the ceramic body is less than 0.5%, fire in the furnace with a temperature of 1125°C∼1210°C;
d. after edge grinding and products packaging post burning, the final products are prepared.

In step c, the furnace is a roller kiln, and the time used in ceramic body burning is 67 to 75 minutes.

Since during the cold working process of the ceramic polished tiles, a lot of grinding block materials are used and a relatively large amount of ultrafine SiC materials is contained in the ceramic residues, which will be decomposed during the high temperature burning process and form closed holes. Proper pore forming materials are selected to build communications between closed pores in the manufacturing method of the present invention on sound-absorbing ceramics. And by adjusting the sizes of the pores, makes the acoustic wave energy attenuate during propagating in the pores. Thus manufactures the sound-absorbing ceramic materials effectively with ceramic residues. The said sound-absorbing ceramics as described in the present invention can be applied in the specific environments including road and rail transit, viaducts, tunnels and more, reducing the environmental noise pollution, as well as applied in the daily constructions including architectural decoration and finishing.

The benefits achieved by the present invention are: using industrial residues, added in low cost pore forming materials to build porous ceramics with effective communicating pores, thus manufacturing the ceramics with good sound absorption effects, which can be applied in the specific environments including road and rail transit, viaducts, tunnels and more, reducing the environmental noise pollution, as well as applied in the daily constructions including architectural decoration and finishing. It has the characters of environment-friendly, low cost, good sound absorption effects as well as fire, electrostatic and ultraviolet (UV) prevention. It owns strong market competition ability, also, the manufacturing method as said in the present invention on the sound-absorbing ceramics is simple and feasible, conductive to industrial production.

### DETAILED DESCRIPTION OF THE PRESENT INVENTION

The present invention discloses a manufacturing method on sound-absorbing ceramics, which is, pulping by ball grinding after matching all the raw materials, spray drying to make dry powders, mixing up with portland cement powder, or cement powder together with at least one decomposable inorganic salt following the proportions (weight percentages), then achieving the ceramic body through compressor dry pressing, after drying, firing in the furnace at a temperature of 1125 °C ~1210 °C. The detailed manufacturing steps are as follows:
a. mix up 15%~55% ceramic residues, 15%~25% clay, 1%~3% talc, 0%~10% quartz, 10%~45%feldspar, as well as reinforcing agent, dispergator and water, ball mill in the ball grinding machine, after sieving and irons hydro-removing, dry up through spraying powders on the mud from the spray drying tower and achieve the dry powder of the mud;
b. add 3%~20% portland cement powder, or 3%~20% portland cement powder (percentage by weight) together with at least one decomposable inorganic salt into the produced dry power, and achieve a mixture;
c. achieving the ceramic body through dry pressing the mixture to a no less than 13 mm thickness by a compressor, and this ceramic body was dried up through dry machine, and when the water contained in the ceramic body is less than 0.5%, firing it in the furnace with a temperature of 1125°C~1210°C;
d. after edge grinding and products packaging post burning, the final products are prepared.

The sound-absorbing ceramics produced own a multiple-communicating-pore structure mainly in glass, quartz and Mullite phases, wherein, ceramic residue is the main foaming materials, and portland cement or portland cement with at least one decomposable inorganic salt is the pore-forming material.

During actual implementations, the following embodiments can be adopted.

### Embodiment 1

Mix up 44% ceramic residue, 16% clay and 1% talc, 32% feldspar and 7% quartz with proper amount of sodium carboxymethyl cellulose, sodium tripolyphosphate and water, ball mill in the ball grinding machine, and produce a mud with no more than 36% water, then dry up through spray drying, mix up 5% portland cement powder with the ceramic dry powder after spraying process, press the mixture into ceramic body of 600mm*600mm*14mm, dry up and burn in the roller kiln, finish in 67 minutes, with a highest burning temperature of 1165°C. The breaking strength of the post burning products is larger than 900N, and measuring the frequency channel of 125Hz-2000Hz with standing wave tube method, the noise reduction coefficient, NRC, measured, is larger than 0.55. It is a good indoor sound-absorbing material.

### Embodiment 2

Add 7% portland cement powder and 3.5% sodium tripolyphosphate into the said ceramic dry powder obtained through the same manufacturing process described above, press into 1200mm*600mm*15mm bricks. After drying, burn the bricks in a roller kiln for 75 minutes, with a burning temperature no more than 1159°C. The breaking strength of the post burning products is larger than 1300N, and after edge grinding and polishing, measure the frequency channel of 800Hz-2000Hz with standing wave tube method, the noise reduction coefficient, NRC, is larger than 0.80. It can be used as traffic noise absorption materials.

### Embodiment 3

Process 33% polishing residue, 22% clay, 1% talc and 44% feldspar following the same method as described in the embodiment 1, mix 4% portland cement powder and 3% sodium carbonate into the produced ceramic dry powder, press into 500mm*500mm*18mm bricks, After drying, burn the bricks in a roller kiln with a burning temperature no more than 1155°C for 70 minutes. The breaking strength of the post burning products is larger than 1700N and measured in the frequency channel of 125Hz-800Hz with standing wave tube method, the noise reduction coefficient, NRC, is larger than 0.9. It can be used as indoor wainscot sound absorption materials.

The above described embodiments are preferred embodiments for the present invention only. It should be understood that, it will be possible for a person skilled in the art to make many modifications and improvements under the same creative designs in the present invention, which shall all fall within the scope of the appended claims of the present invention.

## Claims

1. A sound-absorbing ceramic, wherein, the said sound-absorbing ceramic is a kind of ceramic with multi-communicating-pore structure containing glass phase, quartz phase and Mullite phase.

2. The sound-absorbing ceramic according to claim 1, wherein, the said sound-absorbing ceramic is a kind of ceramic tile or ceramic plate, produced with the ceramic residues acting as the main foaming materials.

3. The sound-absorbing ceramic according to claim 1, wherein, the said sound-absorbing ceramic is a kind of ceramic tiles or ceramic plates manufactured with pore forming materials of portland cement or portland cement with at least one decomposable inorganic salt.

4. The sound-absorbing ceramic according to claim 1, wherein, the raw materials of the said sound-absorbing ceramic include (percentage by weight): 15%~55% ceramic residue, 15%~25% clay, 1%~3% talc, 0.01%~10% quartz, 10%~45%feldspar, as well as reinforcing agent, dispergator and water; together with 3%~20% portland cement powder, or 3%~20% portland cement powder with at least one decomposable inorganic salt.

5. The sound-absorbing ceramic according to claim 4, wherein, the reinforcing agent is using sodium carboxymethyl cellulose, while the dispergator is using sodium tripolyphosphate.

6. The sound-absorbing ceramic according to claim 1, wherein, the breaking strength of the said sound-absorbing ceramic is larger than 900N and the noise reduction coefficient, NRC is larger than 0.55.

7. The sound-absorbing ceramic according to claim 6, wherein, the noise reduction coefficient, NRC of the said sound-absorbing ceramic is larger than 0.9.

8. A manufacturing method of the said sound-absorbing ceramic according to anyone of the claims 1~7, wherein, pulping by ball grinding after matching all the raw materials, spray drying to make dry powders, mixing up with portland cement powder, or portland cement powder together with at least one decomposable inorganic salt, then achieving the ceramic body through compressor dry pressing, after drying, firing in the furnace at a temperature of 1125°C~1210°C.

9. The manufacturing method of the sound-absorbing ceramic according to claim 8, wherein, the method includes the following steps:
a. mix up the raw materials (percentage by weight) including 15%~55% ceramic residue, 15%~25% clay, 1%~3% talc, 0.01%~10% quartz, 10%~45% feldspar, as well as reinforcing agent, dispergator and water, ball mill in the ball grinding machine, after sieving and irons removing, dry up through spraying powers onto the mud from the spray drying tower and achieve the dry power;
b. add 3%~20% portland cement powder, or 3%~20% portland cement powder together with at least one decomposable inorganic salt into the said dry power, and achieve a mixture;
c. achieving the ceramic body through compressor dry pressing the mixture, the thickness of the ceramic body achieved is no less than 13mm, and the ceramic body is dried up by dry machines, and when the water contained in the ceramic body is less than 0.5%, firing it in the furnace with a temperature of 1125°C~1210°C;
d. after edge grinding and products packaging post burning, the final products are prepared.

10. The manufacturing method of the sound-absorbing ceramic according to claim 9, wherein, in the said step c, the furnace is a roller kiln and the burning period of the ceramic body is 67-75 minutes.
